(19) Europäisches Patentamt
European Patent Office
Office européen des brevets

(11) **EP 1 446 794 B1**

(12) **EUROPEAN PATENT SPECIFICATION**

(45) Date of publication and mention
of the grant of the patent:
**09.03.2016 Bulletin 2016/10**

(21) Application number: **02773485.4**

(22) Date of filing: **19.09.2002**

(51) Int Cl.:
*G09G 5/00* *(2006.01)*     *H04N 7/08* *(2006.01)*
*H04N 5/91* *(2006.01)*     *H04N 5/93* *(2006.01)*
*G11B 27/28* *(2006.01)*

(86) International application number:
**PCT/US2002/029753**

(87) International publication number:
**WO 2003/030141 (10.04.2003 Gazette 2003/15)**

(54) **SYSTEM AND METHOD FOR IDENTIFYING DATA ON A STORAGE MEDIUM**

SYSTEM UND VERFAHREN ZUM IDENTIFIZIEREN VON DATEN AUF EINEM SPEICHERMEDIUM

SYSTEME ET PROCEDE D'IDENTIFICATION DE DONNEES SUR UN SUPPORT

(84) Designated Contracting States:
**DE FR GB IT**

(30) Priority: **01.10.2001 US 968687**

(43) Date of publication of application:
**18.08.2004 Bulletin 2004/34**

(73) Proprietor: **Thomson Licensing**
**92130 Issy-les-Moulineaux (FR)**

(72) Inventor: **LIN, Shu**
**Indianapolis, IN 46240 (US)**

(74) Representative: **Hartnack, Wolfgang et al**
**Deutsche Thomson OHG**
**European Patent Operations**
**Karl-Wiechert-Allee 74**
**30625 Hannover (DE)**

(56) References cited:
**US-A- 5 289 276     US-A- 5 532 833**
**US-A- 5 537 528     US-A- 5 635 982**
**US-A- 5 657 433     US-A- 6 119 123**
**US-A- 6 154 771     US-B1- 6 192 183**
**US-B1- 6 912 327**

**Description**

BACKGROUND OF THE INVENTION

1. Technical Field

The inventive arrangements relate generally to video recording systems and more particularly to video recording systems that record digitally encoded video sequences onto disc media such as recordable digital video discs, hard drives and magneto optical discs.

2. Description of Related Art

Many storage mediums that contain recorded data include one or more menus that can be used to enable a user to locate a specific portion of data on the storage medium. These menus can list the titles of each of the works stored on the disc along with a set of commands that enable the user to perform an operation, such as accessing the work identified by the title. In addition, each of the listed titles can contain a corresponding image representative of the work identified by the title. For example, if the work is a video recording of a particular program, then a picture from the program can be positioned next to the title identifying such a recording. This picture is typically an MPEG intra picture that has been reduced to a thumbnail picture format. As such, the user can locate and access data recorded onto the storage medium by referring to a menu containing such thumbnail pictures.

In many instances, the selection of the picture to be placed next to its corresponding title is performed automatically. For example, if a DVD recorder is performing real-time recording, then the DVD recorder will automatically select a picture from the recording. Although convenient, such an automatic selection process has a significant disadvantage: if the picture selected is not indicative of the program that is being recorded, then the title/thumbnail combination in the menu may be inadequate for purposes of identifying the desired recording. As an example, many programs include relatively short non-programming segments of video that contain blank pictures, picture transitions or effects between different scenes, titles or credits, often present at the beginning of the program. Although blank or nearly blank, these pictures are syntactically proper MPEG signals, and the DVD recorder has no way of recognizing that such pictures contain little or no theatric or programming content. Consequently, the automated selection of such programless images as an identifying thumbnail, fails to provide the user with a useful visual indicator to distinguish the recording beyond the title. Thus, what is needed is a way to select automatically a picture suitable for providing visual identification of a recorded work without increasing system complexity or cost.

US 6,154,771 relates to a real-time receipt, decompression and play of compressed streaming video/hypervideo with thumbnail display of past scenes and with replay, hyperlinking and/or recording permissively initiated retrospectively.

US 6,119,123 pertains to an apparatus and a method for optimizing keyframe and blob retrieval and storage.

US 5,635,982 relates to a system for automatic video segmentation and key frame extraction for video sequences having both sharp and gradual transitions.

SUMMARY OF THE INVENTION

The present invention concerns a method according to claim 1.

The present invention also concerns a system according to claim 10.

Preferred embodiments are detailed in the dependent claims.

BRIEF DESCRIPTION OF THE DRAWINGS

FIG. 1 is a block diagram of a system that can identify a work for storage on a storage medium in accordance with the inventive arrangements.
FIG. 2 is a flow chart that illustrates an operation of identifying a work to be stored on a storage medium in accordance with the inventive arrangements.

DETAILED DESCRIPTION OF THE INVENTION

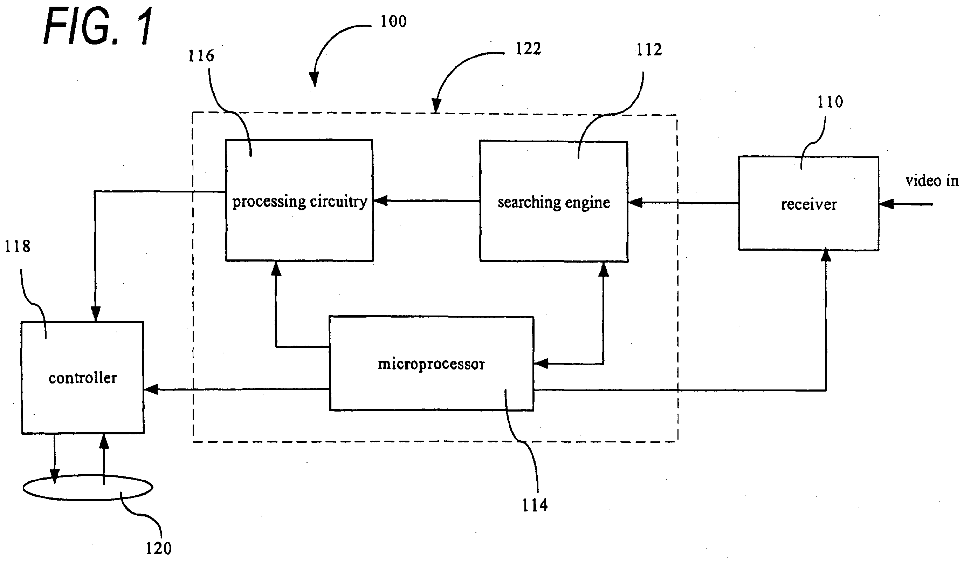

A device 100 for implementing the various advanced features in accordance with the inventive arrangements is shown in block diagram form in FIG. 1. The invention, however, is not limited to the particular system illustrated in FIG. 1, as the invention can be practiced with any other storage medium device capable of receiving a digitally encoded signal. In addition, the device 100 is not limited to reading data from or writing data to any particular type of storage medium, as any storage medium capable of storing digitally encoded data can be used with the device 100.

The system 100 can include a receiver 110, a searching engine 112, a microprocessor 114, processing circuitry 116 and a controller 118. Control and data interfaces can also be provided for permitting the microprocessor 114 to control the operation of the receiver 110, the searching engine 112, the processing circuitry 116 and the controller 118. Suitable software or firmware can be provided in memory for the conventional operations performed by the microprocessor 114. Further, program routines can be provided for the microprocessor 114 in accordance with the inventive arrangements. It should be understood that all or portions of the microprocessor 114, the searching engine 112 and the processing circuitry 116 can be considered a video processor 122 within contemplation of the present invention.

As shown in FIG. 1, the receiver 110 can receive a video signal. In one arrangement, the video signal can be an analog signal, and the receiver 110 can contain suitable circuitry for digitally encoding the video signal. Alternatively, the video signal can already be a digitally encoded signal. The video signal can then be sent to the searching engine 112. As will be explained in detail below, the searching engine 112 can select a potential picture from the video, which may be used for purposes of identifying the work being recorded onto the storage medium. Once a potential picture in the incoming work is selected, the searching engine 112 can signal the microprocessor 114, which can verify that the potential picture is suitable for use as an identifier for the work. The processes employed by the invention to determine whether the selected picture is suitable as an identifier will be explained in the next section.

If the selected picture is not suitable, then the searching engine 112 can select another picture, and the microprocessor 114 can verify that the newly selected picture is appropriate for use as a work identifier. If the microprocessor 114 determines that a selected picture is sufficient, then the microprocessor 114 can signal the processing circuitry 116. to process the selected picture for purposes of creating identifying data, such as a menu, for the particular work being received. Examples of processing performed by the processing circuitry will be explained below. Once a work has been identified, the identifying data can be recorded onto a storage medium 120 through the controller 118. This identifying data can then be accessed at a later time.

Notably, the present invention can be realized in hardware, software, or a combination of hardware and software. Specifically, although the present invention as described herein contemplates the microprocessor 114 of FIG. 1, a typical combination of hardware and software could be a general purpose computer system with a computer program that, when being loaded and executed, controls the computer system and a recording system similar to that shown in FIG. 1 such that it carries out the methods described herein. The present invention can also be embedded in a computer program product which comprises all the features enabling the implementation of the methods described herein, and which when loaded in a computer system is able to carry out these methods.

A computer program in the present context can mean any expression, in any language, code or notation, of a set of instructions intended to cause a system having an information processing capability to perform a particular function either directly or after either or both of the following: (a) conversion to another language, code or notation; and (b) reproduction in a different material form. The invention disclosed herein can be a method embedded in a computer program which can be implemented by a programmer using commercially available development tools for operating systems compatible with the microprocessor 114 described above.

IDENTIFYING DATA ON A STORAGE MEDIUM

According to the inventive arrangements, works for storage on a storage medium can be identified by automatically selecting at least one picture from the work and verifying that the selected picture is suitable for use as an identifier for the work. It should be understood that the term "work" can mean any segment of video. This process of automatically selecting at least one picture and verifying that the selected picture is suitable for use as an identifier can be repeated until a suitable selected picture is verified. Furthermore a user may manually select an image deemed visually suitable for verification by the process. Once a suitable picture is verified, the picture can be processed to create identifying data for the work.

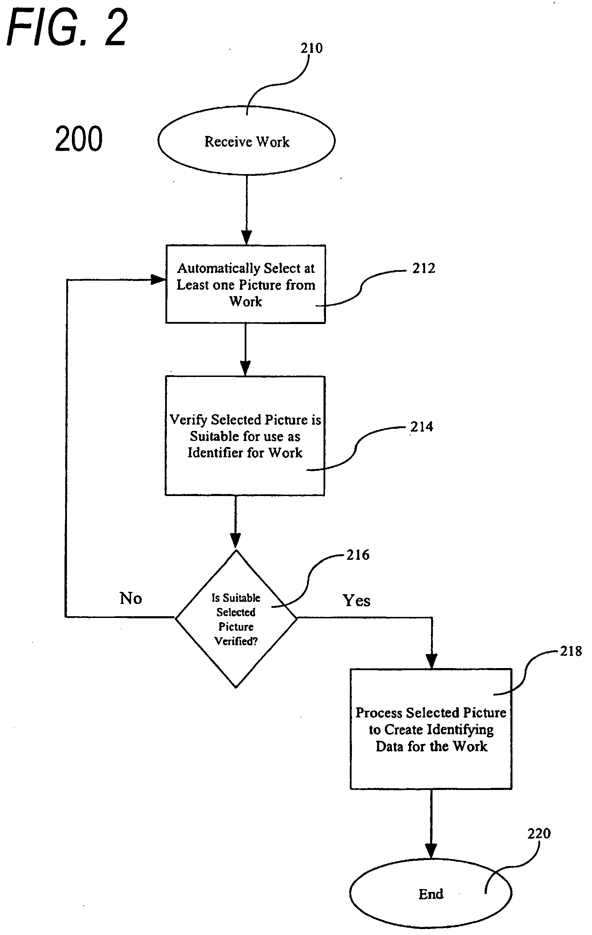

Referring to flowchart 200 in FIG. 2, at step 210, a work for storage on a storage medium can be received. This work can be data that has previously been recorded onto a storage medium or can be a work that is currently being recorded, *i.e.*, the invention can be used during both real and non-real time recording. In one arrangement, the work being received can be an MPEG video segment containing at least on group of pictures (GOP); however, the invention is not so limited, as the work can be any other suitable digitally encoded signal. At step 212, at least one picture from the work can be automatically selected. As an example, if the work from which the picture is selected is an MPEG video signal containing at least one GOP, then a start code from the GOP can be located, and a number of bytes from the GOP start code can be counted until an intra picture is detected. In another example, a picture start code in the MPEG video signal can be located, and an associated picture coding type parameter can be examined to determine whether a particular picture is an intra picture. This process of locating picture start codes and examining the associated picture coding type parameter can continue until an intra picture is detected. It is understood, however, that the invention is not limited to these examples, as any other suitable process of automatically selecting at least one picture from the work can be used.

Referring to step 214, the selected picture can be verified to ensure that it is suitable for use as an identifier for the work. In one arrangement, the number of bytes contained in the selected picture can be counted and then compared to a predetermined threshold. As an example, if the selected picture is an intra picture, then the number of bytes in the intra picture can be compared to the predetermined threshold to determine whether the intra picture is suitable for use as an identifier for the work. The determination of suitability for use as a visual identifier derives from the fact that a well composed visual image will generally result in the generation of significantly more data than a blank picture or title roller caption.

In another arrangement, the predetermined threshold can be a predetermined number of bytes based on several variables such as the bit rate of the work and, if the work is MPEG video, the number of pictures in the GOP's. In one particular algorithm, the average amount of data (D) contained in each intra picture in the work based on the current bit rate of the work can be calculated. Specifically, the bit rate can be divided by the fractional proportion of data contained by the intra picture of a particular GOP as compared to the overall amount of data in the GOP. In addition, the bit rate can be divided by the number of GOP's necessary to produce one second of video. Finally, the bit rate can be divided by the number eight to convert the remaining amount of data to bytes. For example, an intra picture typically contains one-sixth of the total data contained in a GOP. Further, the number of pictures in a typical GOP equates to approximately one-half second of video, and, therefore, it takes two GOP's to produce one second of video. Assuming a bit rate of approximately 4.5Mb/s, the average data rate D can be determined as follows,

$$D = \frac{4.5 \ Mb/s}{6 * 2 * 8} \approx 47 \ Kbytes$$

Thus, the average intra picture in a video signal with a bit rate of roughly 4.5Mb/s contains approximately 47 Kbytes of data and, for this example, if the selected picture contains at least 47 Kbytes of data, then the selected picture can be used as an identifier. In another arrangement, once the average data rate D is calculated, D can be multiplied by a variable K where K can be any number greater than zero. For instance, to increase the probability that the selected picture can be used as an identifier, the value for K can be greater than one, as the predetermined threshold would be greater than D. Alternatively, it may not be necessary to have such a high threshold, and the value for K can be less than one thereby producing a predetermined threshold less than D.

It should be understood that the verifying step is not limited to the example of counting the number of bytes in an intra picture and comparing it to a predetermined threshold, as other suitable techniques can be used. Moreover, the predetermined threshold is not limited to the foregoing examples, as the predetermined threshold can be calculated according to any other suitable procedure. Also, the invention is not limited to the particular numbers selected to explain how the predetermined threshold can be calculated, as it is understood that there are an infinite number of ways to calculate the predetermined threshold according to this particular formula.

Referring to step 216, if the number of bytes in the selected picture meets or exceeds the predetermined threshold, *i.e.,* if the selected picture can be used as an identifier, then the process can continue at step 218. If the selected picture is deemed unsuitable for use as an identifier, then the process can continue at step 212 until a suitable selected picture is verified.

At step 218, if the selected picture can be used as an identifier, then the selected picture can be processed to create identifying data for the work. In one arrangement, the selected picture can be placed in a menu preferably next to a text-based title of the work. To facilitate such placement, the selected picture can also be converted to a thumbnail picture format. Finally, the process can end at step 220. Thus, the invention presents a way to select automatically a suitable picture for purposes of identifying a recorded work without increasing system complexity or costs.

**Claims**

1.  A method for identifying video data for storage on a storage medium, comprising the step (212) of automatically selecting at least one intra picture from the video data, **characterized by**:

    verifying (214) that the selected intra picture contains sufficient information for use as an identifier for the video data by counting a number of bytes in the selected intra picture and comparing the number of bytes in the selected intra picture to a predetermined threshold.

2.  The method according to claim 1, further comprising the step of repeating said automatically selecting step and said verifying step until a selected picture is verified.

3.  The method according to claim 1, further comprising the step (218) of processing the verified selected intra picture to create identifying data for the video data.

4.  The method according to claim 1, wherein the video data is an MPEG video segment containing at least one group of pictures, GOP, and the selected intra picture is an intra picture from the at least one GOP.

5.  The method according to claim 4, wherein said step (212) of automatically selecting a picture from the video data further comprises the step of locating a start code of said intra picture from the at least one GOP.

6.  The method according to claim 4, wherein the predetermined threshold is based in part on a bit rate of the MPEG video segment.

7.  The method according to claim 4, wherein said step (212) of automatically selecting a picture from the video data comprises the steps of:

    - locating a picture start code in the MPEG video segment;
    - examining an associated picture coding type parameter to determine whether a picture is an intra picture;
    - repeating said locating and said examining steps until an intra picture is detected.

8.  A system (100) for identifying video data for storage on a storage medium, comprising:

    - a receiver (110) for receiving the video data;
    - a video processor (114) programmed to:

        -- automatically select an intra picture from the video data;
        -- verify that the selected intra picture contains sufficient information for use as an identifier for the video data by counting a number of bytes in the selected intra picture and comparing the number of bytes in the selected intra picture to a predetermined threshold.

9.  The system according to claim 8, wherein the video processor (114) is further programmed to repeat automatic selection and verification until a selected picture is verified.

10. The system according to claim 8, wherein the video processor (114) is further programmed to process the verified selected intra picture to create identifying data for the video data.

11. The system according to claim 8, wherein the video data is an MPEG video segment containing at least one group of pictures, GOP, and the selected intra picture is an intra picture from the at least one GOP.

12. The system according to claim 11, wherein the video processor (114) is further programmed to locate a start code of said intra picture from the at least one GOP.

13. The system according to claim 11, wherein the predetermined threshold is based in part on a bit rate of the MPEG video segment.

14. The system according to claim 11, wherein the video processor (114) is further programmed to:

    - locate a picture start code in the MPEG video segment;
    - examine an associated picture coding type parameter to determine whether a picture is an intra picture;
    - repeat the locating and the examining steps until an intra picture is detected.

**Patentansprüche**

1.  Verfahren zum Identifizieren von Videodaten zur Speicherung auf einem Speichermedium, das den Schritt (212) einer automatischen Auswahl wenigstens eines Intrabildes aus den Videodaten umfasst, **gekennzeichnet durch** Verifizieren (214), dass das ausgewählte Intrabild genügend Informationen für die Verwendung als Identifizierer für die Videodaten **durch** Zählen einer Anzahl von Bytes in dem ausgewählten Intrabild und Vergleichen der Anzahl von Bytes in dem ausgewählten Intrabild bis zu einem vorbestimmten Schwellwert enthält.

2. Verfahren nach Anspruch 1, das ferner den Schritt einer Wiederholung des automatischen Auswahlschrittes und des Verifizierungsschrittes umfasst, bis ein ausgewähltes Bild verifiziert ist.

3. Verfahren nach Anspruch 1, das ferner den Schritt (218) zur Verarbeitung des verifizierten ausgewählten Intrabildes umfasst, um die Identifizierungsdaten für die Videodaten zu erstellen.

4. Verfahren nach Anspruch 1, bei dem die Videodaten ein MPEG-Videosegment sind, das wenigstens eine Gruppe von Bildern, GOP, enthält, und das ausgewählte Intrabild ein Intrabild aus der wenigstens einen GOP ist.

5. Verfahren nach Anspruch 4, bei dem der Schritt (212) der automatischen Auswahl eines Bildes aus den Videodaten ferner den Schritt zur Lokalisierung eines Startcodes des Intrabildes aus der wenigstens einen GOP umfasst.

6. Verfahren nach Anspruch 4, bei dem der vorbestimmte Schwellwert teilweise auf einer Bitrate des MPEG-Videosegmentes beruht.

7. Verfahren nach Anspruch 4, bei dem der Schritt (212) der automatischen Auswahl eines Bildes aus den Videodaten die Schritte umfasst:

    - Lokalisieren eines Bildstartcodes in dem MPEG-Videosegment;
    - Prüfen eines zugeordneten Parameters für einen Bildcodetyp, ob ein Bild ein Intrabild ist;
    - Wiederholen der Lokalisierungs- und Prüfungsschritte, bis ein Intrabild festgestellt wird.

8. System (100) zum Identifizieren von Videodaten zur Speicherung auf einem Speichermedium, umfassend:

    - Einen Empfänger (110) zum Empfang der Videodaten;
    - einen Videoprozessor (114), der programmiert ist, um:

        - - automatisch ein Intrabild aus den Videodaten auszuwählen;
        - - zu verifizieren, dass das ausgewählte Intrabild genug Informationen für die Benutzung als Identifizierer für die Videodaten durch Zählen einer Anzahl von Bytes in dem ausgewählten Intrabild und Vergleich der Anzahl von Bits in dem ausgewählten Intrabild bis zu einem vorbestimmten Schwellwert enthält.

9. System nach Anspruch 8, bei dem der Videoprozessor (114) ferner programmiert ist, die automatische Auswahl und Verifizierung zu wiederholen, bis ein ausgewähltes Bild verifiziert wird.

10. System nach Anspruch 8, bei dem der Videoprozessor (114) ferner programmiert ist, um das verifizierte ausgewählte Intrabild zu verarbeiten, um Identifizierungsdaten für die Videodaten zu erstellen.

11. System nach Anspruch 8, bei dem die Videodaten ein MPEG-Videosegment sind, das wenigstens eine Gruppe von Bildern, GOP, enthält, und das ausgewählte Intrabild ein Intrabild aus der wenigstens einen GOP ist:

12. System nach Anspruch 11, bei dem der Videoprozessor (114) programmiert ist, um einen Startcode des Intrabildes aus der wenigstens einen GOP zu lokalisieren.

13. System nach Anspruch 11, bei dem der vorbestimmte Schwellwert wenigstens teilweise auf einer Bitrate des MPEG-Videosegments beruht.

14. System nach Anspruch 11, bei dem der Videoprozessor (114) ferner programmiert ist, um:

    - Einen Bildstartcode in dem MPEG-Videosegment zu lokalisieren;
    - einen zugeordneten Parameter für einen Bildkodiertyp zu prüfen, um zu bestimmen, ob ein Bild ein Intrabild ist,
    - die Lokaisierungs- und Prüfungsschritte zu wiederholen, bis ein Intrabild festgestellt wird.

**Revendications**

1. Procédé d'identification de données vidéo pour stockage sur un support de stockage, comprenant l'étape (212) de sélection automatique d'au moins une image intra dans les données vidéo, **caractérisé par** :

   la vérification (214) de l'image intra sélectionnée pour s'assurer qu'elle contient suffisamment d'informations pour être utilisée comme identifiant pour les données vidéo grâce au comptage des octets dans l'image intra sélectionnée et à la comparaison du nombre d'octets dans l'image intra sélectionnée à un seuil prédéterminé.

2. Procédé selon la revendication 1, comprenant en outre l'étape de répétition de ladite étape de sélection automatique et de ladite étape de vérification jusqu'à ce qu'une image sélectionnée soit vérifiée.

3. Procédé selon la revendication 1, comprenant en outre l'étape (218) de traitement de l'image intra sélectionnée vérifiée pour créer des données d'identification pour les données vidéo.

4. Procédé selon la revendication 1, dans lequel les données vidéo sont un segment vidéo MPEG contenant au moins un groupe d'images (GOP) et l'image intra sélectionnée est une image intra du GOP.

5. Procédé selon la revendication 4, dans lequel ladite étape (212) de sélection automatique d'une image dans les données vidéo comprend en outre l'étape de localisation d'un code de départ de ladite image intra du GOP.

6. Procédé selon la revendication 4, dans lequel le seuil prédéterminé est basé en partie sur un débit binaire du segment vidéo MPEG.

7. Procédé selon la revendication 4, dans lequel ladite étape (212) de sélection automatique d'une image dans les données vidéo comprend les étapes suivantes:

   - localisation d'un code de départ d'image dans le segment vidéo MPEG ;
   - examen d'un paramètre de type de codage d'image associé pour déterminer si une image est une image intra ;
   - répétition de ladite étape de localisation et de ladite étape d'examen jusqu'à ce qu'une image intra soit détectée.

8. Système (100) d'identification de données vidéo pour stockage sur un support de stockage, comprenant :

   - un récepteur (110) pour recevoir les données vidéo;
   - un processeur vidéo (114) programmé pour :

      - sélectionner automatiquement une image intra dans les données vidéo;
      - vérifier que l'image intra sélectionnée contient suffisamment d'informations pour être utilisée comme identifiant pour les données vidéo en comptant les octets dans l'image intra sélectionnée et en comparant le nombre d'octets dans l'image intra sélectionnée à un seuil prédéterminé.

9. Système selon la revendication 8, dans lequel le processeur vidéo (114) est programmé en outre pour répéter la sélection automatique et la vérification jusqu'à ce qu'une image sélectionnée soit vérifiée.

10. Système selon la revendication 8, dans lequel le processeur vidéo (114) est programmé en outre pour traiter l'image intra sélectionnée vérifiée afin de créer des données d'identification pour les données vidéo.

11. Système selon la revendication 8, dans lequel les données vidéo sont un segment vidéo MPEG contenant au moins un groupe d'images (GOP) et l'image intra sélectionnée est une image intra du GOP.

12. Système selon la revendication 11, dans lequel le processeur vidéo (114) est programmé en outre pour localiser un code de départ de ladite image intra du GOP.

13. Système selon la revendication 11, dans lequel le seuil prédéterminé est basé en partie sur un débit binaire du segment vidéo MPEG.

14. Système selon la revendication 11, dans lequel le processeur vidéo (114) est programmé en outre pour :

- localiser un code de départ d'image dans le segment vidéo MPEG ;
- examiner un paramètre de type de codage d'image associé pour déterminer si une image est une image intra ;
- répéter les étapes de localisation et d'examen jusqu'à ce qu'une image intra soit détectée.

- localiser un code de départ d'image dans le segment vidéo MPEG ;
- examiner un paramètre de type de codage d'image associé pour déterminer si une image est une image intra ;
- répéter les étapes de localisation et d'examen jusqu'à ce qu'une image intra soit détectée.

## FIG. 1

EP 1 446 794 B1

# FIG. 2

200

```
        ( Receive Work )  ── 210

               │
               ▼
   ┌─────────────────────────┐
   │ Automatically Select at │ ── 212
   │ Least one Picture from  │
   │          Work           │
   └─────────────────────────┘
               │
               ▼
   ┌─────────────────────────┐
   │ Verify Selected Picture is │ ── 214
   │   Suitable for use as   │
   │    Identifier for Work  │
   └─────────────────────────┘
               │
               ▼
              ◇  ── 216
   No       Is Suitable        Yes
◄────────    Selected      ────────►
             Picture
             Verified?
                                  │
                                  ▼
                    ┌─────────────────────────┐
                    │ Process Selected Picture │ ── 218
                    │   to Create Identifying  │
                    │    Data for the Work     │
                    └─────────────────────────┘
                                  │
                                  ▼
                            (  End  )  ── 220
```

**EP 1 446 794 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6154771 A
- US 6119123 A
- US 5635982 A